# FASCICULE DE BREVET EUROPEEN

(11) **EP 3 190 012 B1**
(45) Date de publication et mention de la délivrance du brevet: **09.01.2019**
(21) Numéro de dépôt: 16203489.6
(22) Date de dépôt: 12.12.2016
(51) Int. Cl.: B60S 1/48

(54) **DISPOSITIF DE DISTRIBUTION DE LIQUIDE LAVE-GLACE POUR VÉHICULE AUTOMOBILE ET SYSTÈME D'ESSUYAGE**
VORRICHTUNG ZUR VERTEILUNG DER SCHEIBENWISCHFLÜSSIGKEIT FÜR KRAFTFAHRZEUG, UND ENTSPRECHENDES REINIGUNGSSYSTEM
MOTOR VEHICLE WASHER FLUID DISTRIBUTION DEVICE AND WIPING SYSTEM

(30) Priorité: 06.01.2016 FR 1650082
(43) Date de publication de la demande: 12.07.2017
(73) Titulaire: Valeo Systèmes d'Essuyage, 78322 Le Mesnil Saint Denis (FR)
(72) Inventeur: JARASSON, Jean-Michel, 78321 LE MESNIL SAINT DENIS (FR); CAILLOT, Gérald, 78720 CERNAY LA VILLE (FR); IZABEL, Vincent, 91380 CHILLY MAZARIN (FR)
(74) Mandataire: Vincent, Catherine Marie Marguerite

(56) Documents cités:
- EP-A1- 2 777 996
- DE-A1-102012 100 880
- FR-A1- 3 002 507

## Description

La présente invention est relative à un dispositif de distribution de liquide lave-glace, en particulier pour balais d'essuie-glace, de véhicule automobile. L'invention concerne également un système d'essuyage et/ou de lavage comprenant un dispositif de distribution de liquide lave-glace.

Par liquide de lavage on entend dans le cadre de la présente invention tout liquide de type lave glace adapté au nettoyage d'une surface vitrée de véhicule, en particulier le nettoyage associé à l'utilisation de balai d'essuie-glace.

Les véhicules automobiles sont couramment équipés de système d'essuyage du pare-brise servant à assurer au conducteur une vision dégagée de son environnement, en particulier en cas d'intempéries. Un tel système comprend généralement au moins un balai d'essuie-glace qui racle la surface extérieure du pare-brise de manière à évacuer en dehors du champ de vision du conducteur l'eau et/ou la neige présente sur cette surface.

Il est également connu d'équiper les véhicules d'un système de lavage agencé pour projeter un liquide de lavage sur le pare-brise, de manière à faciliter la dissolution des salissures, et ainsi augmenter la qualité du nettoyage de ce pare-brise en particulier sous l'action du système d'essuyage. Dans une version de système de lavage, celui-ci comporte des gicleurs situées sur le véhicule. Dans une autre version il a été proposé un balai d'essuie-glace qui comporte son propre élément de projection de liquide de lavage. Autrement dit, la projection du liquide de lavage a lieu depuis le balai d'essuie-glace lui-même, à partir de buse d'aspersion ou gicleurs réparties le long dudit balai.

Certains balais d'essuie-glace comportent une ou deux rampes d'arrosage pourvues d'un ou d'une multitude de gicleurs ou orifices d'arrosage sous pression, permettant la distribution du liquide lave-glace sur la surface vitrée. Les gicleurs sont alimentés en liquide lave-glace contenu dans un réservoir par l'intermédiaire d'une pompe.

On utilise, notamment pour désassembler les balais d'essuie-glace et les remplacer, un réseau de conduites dans lequel une conduite hydraulique principale est raccordée à une pompe de liquide lave-glace du véhicule automobile et à deux conduites hydrauliques secondaires, par exemple de balai d'essuie-glace, via un raccord hydraulique. La conduite hydraulique principale et le raccord hydraulique sont généralement disposés sous le capot du véhicule automobile, c'est-à-dire dans le logement moteur du véhicule automobile, tandis que les conduites hydrauliques secondaires sont principalement à l'extérieur du logement moteur, par exemple les conduites hydrauliques secondaires des balais d'essuie-glace sont intégrées dans les bras d'essuie-glace.

Le document EP 2 777 996 A1 montre un dispositif de distribution comme dans le préambule de la première revendication.

Lorsque la température extérieure est trop basse, par exemple en dessous de 5°C, on peut réchauffer/dégeler le liquide lave-glace en réchauffant les conduites hydrauliques dans lesquelles circule le liquide lave-glace. Ainsi le liquide lave-glace est réchauffé et acheminé dans les conduites jusqu'au(x) rampes d'arrosage ou gicleur(s) sans obstacle dans les canaux de circulation du liquide lave-glace.

Toutefois, une zone froide peut se créer dans la zone de jonction des conduites hydrauliques, pouvant perturber la circulation du liquide lave-glace en cas de gel, voire la bloquer totalement.

Un des buts de la présente invention est de pallier au moins partiellement ces inconvénients en proposant un dispositif de distribution de liquide lave-glace amélioré, permettant d'éviter les zones froides à la jonction entre la conduite hydraulique principale et les conduites hydraulique secondaires, de faible coût, de faible encombrement qui soit également robuste et facile à assembler ou désassembler.

A cet effet, la présente invention a pour objet un dispositif de distribution de liquide lave-glace, notamment pour balais d'essuie-glace comportant un support de connecteurs comprenant une embase munie d'un dispositif de fixation configuré pour maintenir au moins un raccord hydraulique dans un emplacement de l'embase, caractérisé en ce qu'un logement recevant un élément chauffant du dispositif de distribution est ménagé dans le support de connecteur, une portion de paroi délimitant le logement étant destinée à être en contact avec le au moins un raccord hydraulique.

L'embase assure ainsi le transfert de chaleur par conduction entre l'élément chauffant et le au moins un raccord hydraulique pour réchauffer ce dernier. L'utilisation d'un élément chauffant indépendant des moyens de chauffage propres des conduites hydrauliques rend possible le chauffage de raccords hydrauliques de conduites hydrauliques qui ne sont pas elles-mêmes réchauffées.

L'élément chauffant étant fixé à l'embase, elle-même fixée au véhicule, l'élément chauffant est solidement ancré au support de connecteurs.

En outre, l'embase présente une importante épaisseur de matériau autour du logement, ce qui permet un bon échange thermique avec le au moins un raccord hydraulique.

Selon une ou plusieurs caractéristiques du dispositif de distribution, prise seule ou en combinaison,
- le logement reçoit une résine thermoconductrice enrobant l'élément chauffant, la résine thermoconductrice étant en contact avec les parois du logement,
- le support de connecteur comporte un capot de maintien coopérant avec l'embase pour se fixer à l'embase au-dessus de l'emplacement du au moins un raccord hydraulique destiné à être maintenu par le dispositif de fixation,
- le capot de maintien est fixé par clipsage à l'embase,
- le logement est ménagé dans un capot de maintien du support de connecteurs,
- le capot de maintien est réalisé en matériau plastique thermiquement conducteur ou en matériau métallique,
- le logement est ménagé dans l'embase du support de connecteurs sous l'emplacement du au moins un raccord hydraulique destiné à être maintenu par le dispositif de fixation,
- l'embase du support de connecteurs est réalisée en matériau plastique thermiquement conducteur ou en matériau métallique,
- le logement présente au moins une ouverture latérale pour le passage des fils électriques de l'élément chauffant,
- le dispositif de fixation présente une cavité de forme générale cylindrique définissant l'emplacement destiné à recevoir le au moins un raccord hydraulique, ladite cavité présentant :
   - une première ouverture conformée pour le passage d'au moins une entrée du au moins un raccord hydraulique,
   - une deuxième ouverture conformée pour le passage d'au moins une première sortie du au moins un raccord hydraulique, et
   - une troisième ouverture conformée pour le passage d'au moins une deuxième sortie du au moins un raccord hydraulique.

L'invention a aussi pour objet un système d'essuyage et/ou de lavage caractérisé en ce qu'il comporte un dispositif de distribution tel que décrit précédemment.

D'autres caractéristiques et avantages de l'invention ressortiront de la description suivante, donnée à titre d'exemple, sans caractère limitatif, en regard des dessins annexés sur lesquels :
- la figure 1 représente une vue schématique d'éléments d'un dispositif de distribution de liquide lave-glace de véhicule automobile selon un premier exemple de réalisation,
- la figure 2 représente une vue en perspective et en agrandi de l'encadré en pointillés du dispositif de distribution de la figure 1,
- la figure 3 représente le dispositif de distribution de la figure 2 au cours de sa fabrication,
- la figure 4 représente une vue agrandie d'un détail du dispositif de distribution de la figure 1,
- la figure 5 représente une vue en perspective du dispositif d'un distribution de liquide lave-glace selon un deuxième exemple de réalisation,
- la figure 6 représente une vue de dessous du dispositif de distribution de la figure 5,
- la figure 7 montre une vue agrandie d'un détail du dispositif de distribution de la figure 6, et
- la figure 8 montre une vue agrandie d'un détail du dispositif de distribution de la figure 5 au cours de sa fabrication.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

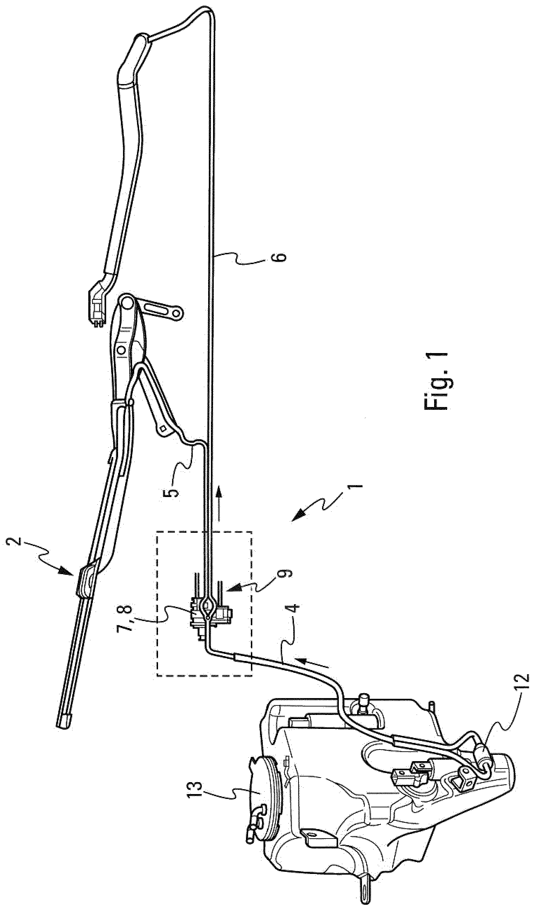

La figure 1 représente une vue schématique générale d'un système d'essuyage et de lavage comprenant un dispositif de distribution 1 de liquide lave-glace, une conduite hydraulique principale 4, deux conduites hydrauliques secondaires 5, 6 et deux balais d'essuie-glace 2 de véhicule automobile (un seul balai est représenté sur la figure 1).

Le dispositif de distribution 1 de liquide lave-glace comporte au moins un raccord hydraulique 7, 8 et un support de connecteurs 9.

La conduite hydraulique principale 4 et les conduites hydrauliques secondaires 5, 6 comportent par exemple un manchon respectif dans lequel sont ménagés un ou deux canaux de circulation 14 pour la circulation du liquide lave-glace.

Le manchon est en matériau souple, par exemple en caoutchouc.

La conduite hydraulique principale 4 est raccordée d'une part à une pompe 12 du système d'essuyage, la pompe 12 étant elle-même raccordée à un réservoir 13 du système d'essuyage et d'autre part, à au moins une entrée du au moins un raccord hydraulique 7, 8. Les conduites hydrauliques secondaires 5, 6 sont raccordées à au moins une sortie du au moins un raccord hydraulique 7, 8 et aux rampes d'arrosage respective des balais d'essuie-glace 2.

Le raccord hydraulique 7, 8 est par exemple un élément tubulaire en « T » ou en « Y » permettant la dérivation du liquide lave-glace depuis la conduite hydraulique principale 4 vers chacune des deux conduites hydrauliques secondaires 5, 6.

Le raccord hydraulique 7, 8 peut être muni d'un clapet anti-retour. Le clapet anti-retour permet le passage du liquide pompé dans le sens de circulation allant de la pompe 12 vers la rampe et le blocage du retour du flux de liquide pompé dans l'autre sens, c'est-à-dire des balais 2 vers la pompe 12. Le clapet anti-retour évite ainsi toute redescente de liquide des balais d'essuie-glace 2 vers la pompe 12, notamment en phase d'arrêt de distribution de liquide dans un canal de circulation 14.

Il est bien entendu possible d'utiliser d'autres types de raccord hydraulique, sans clapets anti-retour, permettant simplement la circulation du liquide lave-glace des canaux 14 de la conduite hydraulique principale 4 vers les canaux 14 des conduites hydrauliques secondaires 5, 6.

Le support de connecteurs 9 comporte une embase 31 comprenant un dispositif de fixation 18 configuré pour maintenir le au moins un raccord hydraulique 7, 8 dans un emplacement 30 de l'embase 31.

Le dispositif de fixation 18 apte à maintenir le au moins un raccord hydraulique 7 peut être prévu pour retenir le au moins un raccord hydraulique 7, 8 de manière amovible.

Il comporte par exemple une cavité de forme générale sensiblement cylindrique.

La cavité présente une première ouverture, conformée pour le passage d'une entrée d'au moins un raccord hydraulique 7, 8, une deuxième ouverture, conformée pour le passage d'au moins une première sortie du au moins un raccord hydraulique 7, 8 et une troisième ouverture conformée pour le passage d'au moins une deuxième sortie du au moins un raccord hydraulique 7, 8.

Dans le mode de réalisation bi-rampe pour des balais d'essuie-glace à deux rampes d'arrosage, le dispositif de distribution 1 comporte deux raccords hydrauliques 7, 8 pouvant être superposés l'un en dessus de l'autre de manière que les canules d'entrée des raccords hydraulique 7, 8 respectifs soient superposées en étant sensiblement parallèles entre elles et que les canules de sortie des raccords hydraulique 7, 8 respectifs soient également superposées en étant sensiblement parallèles entre elles.

Les deux raccords hydraulique 7, 8 sont indépendants l'un de l'autre mais peuvent être réalisés d'un seul tenant ou distincts.

Le support de connecteur 9 peut en outre comporter un capot de maintien 46.

Le capot de maintien 46 coopère avec l'embase 31 du support de connecteurs 9 pour se fixer à l'embase 31 au-dessus de l'emplacement du au moins un raccord hydraulique 7, 8 maintenu par le dispositif de fixation 18. Une fois fixé à l'embase 31, le capot de maintien 46 plaque le au moins un raccord hydraulique 7, 8 dans la cavité du dispositif de fixation 18 de l'embase 31. Le capot de maintien 46 améliore ainsi le maintien en position du au moins un raccord hydraulique 7, 8.

Le capot de maintien 46 présente par exemple une forme de capuchon enveloppant partiellement une face d'un raccord hydraulique 7. Le capuchon peut présenter des découpes latérales pour le passage des canules d'entrée et sortie du au moins un raccord hydraulique 7, 8.

Le capot de maintien 46 peut être fixé par clipsage à l'embase 31.

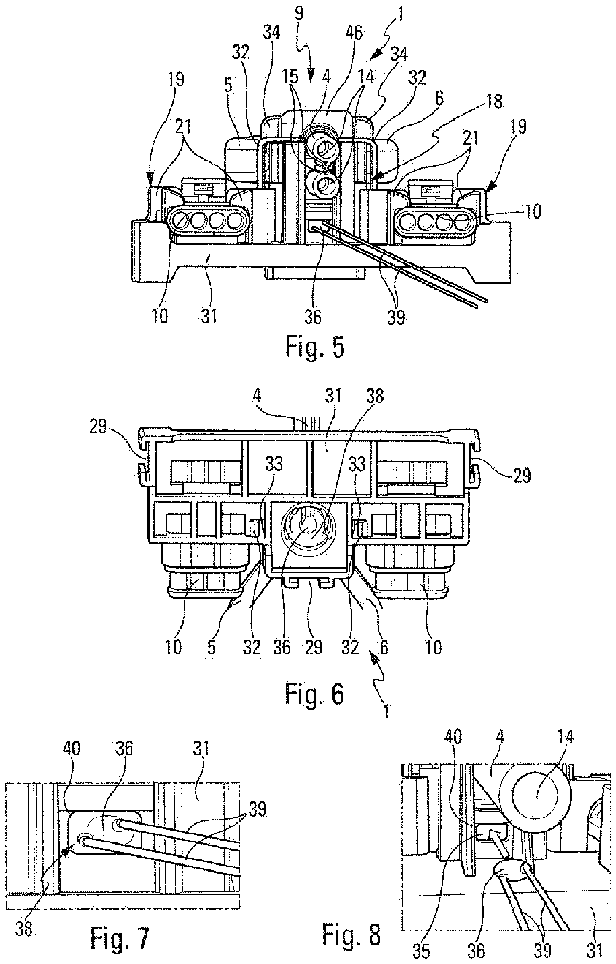

Il comporte par exemple au moins deux pattes élastiques 32 diamétralement opposées s'étendant perpendiculairement du capuchon et configurées pour s'emboîter élastiquement dans deux orifices complémentaires 33 ménagés dans l'embase 31 du support de connecteurs 9 (figure 6).

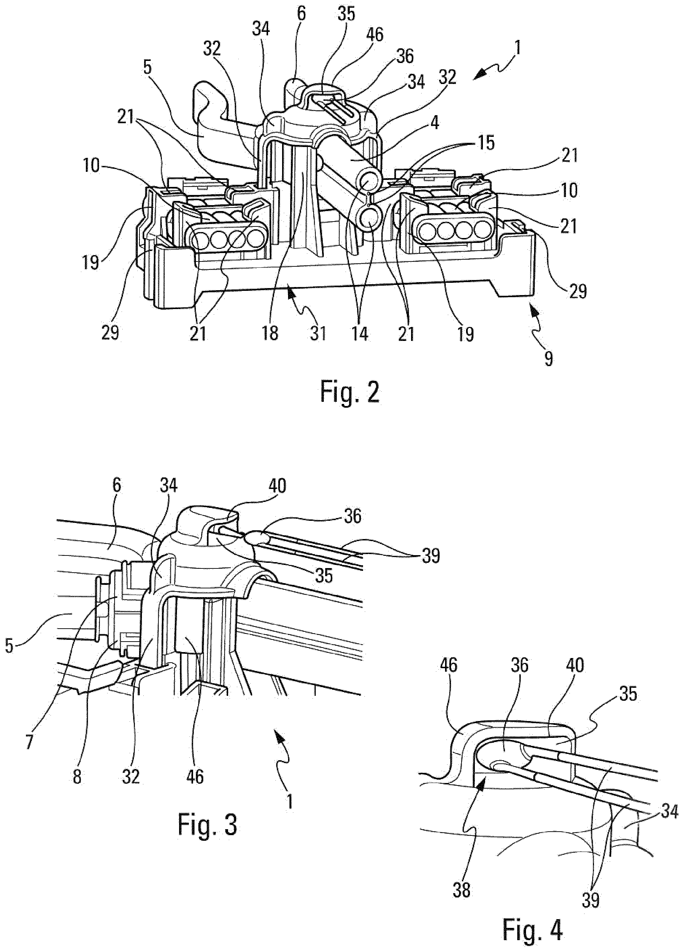

Le capot de maintien 46 peut également comporter au moins une oreille d'écartement 34 (figure 4). Ainsi, les pattes élastiques 32 se prolongent de chaque côté du capuchon par une oreille d'écartement 34 respective, permettant de faciliter le déboîtage du capot de maintien 46.

En outre, un logement 35 recevant un élément chauffant 36 du dispositif de distribution 1 est ménagé dans le support de connecteur 9 et une portion de paroi délimitant le logement 35 est en contact avec le au moins un raccord hydraulique 7, 8.

L'élément chauffant 36 est par exemple une thermistance telle que de type CTP (Coefficient de Température Positif ou PTC en anglais).

Selon un premier exemple de réalisation représenté sur les figures 2, 3 et 4, le logement 35 est ménagé dans le capot de maintien 46 du support de connecteurs 9.

La portion de paroi délimitant le logement 35 en contact avec le raccord hydraulique 7, 8 est ainsi formée par une face interne du capuchon du capot de maintien 46.

Le logement 35 peut en outre recevoir une résine thermoconductrice 38 enrobant l'élément chauffant 36, la résine thermoconductrice 38 étant en contact avec les parois du logement 35.

La résine thermoconductrice 38 est par exemple coulée dans le logement 35 après la mise en place de l'élément chauffant 36 en laissant les fils électriques 39 de l'élément chauffant 36 apparents (figure 3).

Pour cela, le logement 35 peut présenter une ouverture latérale 40 pour le passage des fils électriques 39 de l'élément chauffant 36. L'ouverture latérale 40 est par exemple agencée sur le même côté du support de connecteur 9 que le côté auquel se raccorde la conduite hydraulique principale 4.

La résine thermoconductrice 38 assure le maintien mécanique de l'élément chauffant 36 et l'échange thermique entre l'élément chauffant 36 et le capot de maintien 46 du support de connecteurs 9.

On prévoit en outre que le capot de maintien 46 soit réalisé en matériau plastique thermiquement conducteur ou en matériau métallique. Le matériau plastique thermiquement conducteur est par exemple formé d'une matrice en plastique chargée d'additifs thermoconducteurs tels que du graphite, du carbone, de la fibre de verre ou des particules métalliques.

Le capot de maintien 46 est par exemple réalisé d'une seule pièce, obtenu par exemple par emboutissage lorsqu'il est en matériau métallique tel qu'en tôle ou par injection ou moulage lorsqu'il est réalisé en matériau plastique thermoconducteur.

Le capot de maintien 46 assure ainsi le transfert de chaleur par conduction entre l'élément chauffant 36 et le raccord hydraulique 7, 8 pour réchauffer ce dernier. L'utilisation d'un élément chauffant 36 indépendant des moyens de chauffage propres des conduites hydrauliques 4, 5, 6 rend possible le chauffage de raccords hydrauliques 7, 8 de conduites hydrauliques qui ne sont pas elles-mêmes réchauffées. En outre, il est plus économique de changer seulement le capot de maintien 46 si l'élément chauffant 36 doit être changé plutôt que de changer l'intégralité d'une conduite hydraulique chauffée chauffant aussi le raccord hydraulique.

La conduite hydraulique principale 4 et/ou les conduites hydrauliques secondaires 5, 6, peuvent comporter également au moins un conducteur chauffant 15, par exemple noyé dans la masse du manchon (figure 2).

Le conducteur chauffant 15 est un fil résistif qui réchauffe le manchon et ainsi, réchauffe le liquide lave-glace circulant dans le canal de circulation 14. Le liquide lave-glace est ainsi réchauffé lorsque la température extérieure est trop basse. De plus, étant donné que le fil résistif est logé dans le manchon, il ne constitue pas un obstacle à l'écoulement du liquide lave-glace dans le canal de circulation. Le liquide lave-glace réchauffé participe au maintien de la fonction lavage à basse température, au maintien des caractéristiques de la structure du balai et au dégivrage des surfaces vitrées.

Des connecteurs électriques 10 raccordent électriquement par exemple des fils électriques d'alimentation du véhicule automobile (non représentés) aux conducteurs chauffants 15 respectifs des conduites secondaires des balais d'essuie-glace 5, 6.

Le support de connecteurs 9 comporte des dispositifs de fixation supplémentaires 19, par exemple deux, aptes à maintenir de manière amovible un connecteur électrique 10 respectif. Les dispositifs de fixation supplémentaires 19 comportent par exemple deux paires de pattes élastiques d'accrochage 21 agencées symétriquement sur l'embase 31 du support de connecteurs 9. Les pattes élastiques d'accrochage 21 peuvent s'écarter élastiquement pour clipper les connecteurs électriques 10 de forme complémentaire.

Les connecteurs électriques 10 peuvent s'emboîter horizontalement ou verticalement (non représentés), sur une même face de l'embase 31 du support de connecteurs 9 ou sur des faces opposées, selon l'espace disponible autour du support de connecteur 9. Les dispositifs de fixation supplémentaires 19 sont par exemple agencés de part et d'autre du dispositif de fixation 18 apte à maintenir le au moins un raccord hydraulique 7, 8.

L'embase 31 peut comporter par ailleurs un moyen de maintien à un véhicule automobile, tel que trois glissières de maintien 29.

Ce même support de connecteurs 9 s'adapte aussi très facilement à un dispositif de distribution de liquide lave-glace 1 sans chauffage, en particulier à un dispositif de distribution de liquide lave-glace pour balais d'essuie-glace de véhicule automobile à double rampe d'arrosage sans chauffage. Dans ce cas, le dispositif de distribution de liquide lave-glace ne comporte pas de connecteurs électriques 10. La conduite hydraulique principale 4 et les conduites hydrauliques secondaires 5, 6 ne comportent pas de conducteurs chauffants. Egalement, le support de connecteurs 9 s'adapte à un dispositif de distribution de liquide lave-glace 1 pour des balais d'essuie-glace mono-rampe, chauffés ou non, présentant une unique rampe d'arrosage pour la distribution du liquide lave-glace sur un côté du bras du balai d'essuie-glace (non représenté). Dans ce cas, le dispositif de distribution de liquide lave-glace comporte un unique raccord hydraulique 7 et deux connecteurs électriques 10 servant à alimenter la chauffe du balai si les balais d'essuie-glace et/ou les conduites sont chauffés.

Selon un deuxième exemple de réalisation représenté sur les figures 5, 6, 7 et 8, le logement 35 est ménagé dans l'embase 31 du support de connecteurs 9, sous l'emplacement du au moins un raccord hydraulique 7, 8 destiné à être maintenu par le dispositif de fixation 18 du support de connecteurs 9.

La portion de paroi délimitant le logement 35 en contact avec le raccord hydraulique 7, 8 est ainsi formée par une face interne de la cavité du dispositif de fixation 18 de l'embase 31 du support de connecteurs 9.

Comme précédemment, le logement 35 peut recevoir une résine thermoconductrice 38 enrobant l'élément chauffant 36, la résine thermoconductrice 38 étant en contact avec les parois du logement 35.

La résine thermoconductrice 38 est par exemple coulée dans le logement 35 après la mise en place de l'élément chauffant 36 en laissant les fils électriques 39 de l'élément chauffant 36 apparents (figure 8).

Pour cela, le logement 35 peut présenter une ouverture latérale 40 pour le passage des fils électriques 39 de l'élément chauffant 36. L'ouverture latérale 40 est par exemple agencée sur le même côté du support de connecteur 9 que le côté auquel se raccorde la conduite hydraulique principale 4.

La résine thermoconductrice 38 assure le maintien mécanique de l'élément chauffant 36 et l'échange thermique entre l'élément chauffant 36 et l'embase 31 du support de connecteurs 9.

On prévoit en outre que l'embase 31 du support de connecteurs 9 soit réalisée en matériau plastique thermiquement conducteur ou en matériau métallique. L'embase 31 est par exemple formée d'une seule pièce, obtenue par exemple par emboutissage lorsqu'elle est en matériau métallique tel qu'en tôle ou par injection ou moulage lorsqu'elle est réalisée en matériau plastique thermoconducteur.

L'embase 31 assure ainsi le transfert de chaleur par conduction entre l'élément chauffant 36 et le au moins un raccord hydraulique 7, 8 pour réchauffer ce dernier. L'utilisation d'un élément chauffant 36 indépendant des moyens de chauffage propres des conduites hydrauliques rend possible le chauffage de raccords hydrauliques 7, 8 de conduites hydrauliques qui ne sont pas elles-mêmes réchauffées.

L'élément chauffant 36 étant fixé à l'embase 31, elle-même fixée au véhicule via les glissières de maintien 29, l'élément chauffant 36 est solidement ancré au support de connecteurs 9.

En outre, l'embase 31 présente une importante épaisseur de matériau autour du logement 35, ce qui permet un bon échange thermique avec le au moins un raccord hydraulique 7, 8.

## Revendications

1. Dispositif de distribution (1) de liquide lave-glace comportant un support de connecteurs (9) comprenant une embase (31) munie d'un dispositif de fixation (18) configuré pour maintenir au moins un raccord hydraulique (7, 8) dans un emplacement de l'embase (31), **caractérisé en ce qu'**un logement (35) recevant un élément chauffant (36) du dispositif de distribution (1) est ménagé dans le support de connecteur (9), une portion de paroi délimitant le logement (35) étant destinée à être en contact avec le au moins un raccord hydraulique (7, 8).

2. Dispositif de distribution (1) selon la revendication précédente, **caractérisé en ce que** le logement (35) reçoit une résine thermoconductrice (38) enrobant l'élément chauffant (36), la résine thermoconductrice (38) étant en contact avec les parois du logement (35).

3. Dispositif de distribution (1) selon l'une des revendications précédentes, **caractérisé en ce que** le support de connecteur (9) comporte un capot de maintien (46) coopérant avec l'embase (31) pour se fixer à l'embase (31) au-dessus de l'emplacement du au moins un raccord hydraulique (7, 8) destiné à être maintenu par le dispositif de fixation (18).

4. Dispositif de distribution (1) selon la revendication précédente, **caractérisé en ce que** le capot de maintien (46) est fixé par clipsage à l'embase (31).

5. Dispositif de distribution (1) selon l'une des revendications 3 ou 4, **caractérisé en ce que** le logement (35) est ménagé dans un capot de maintien (46) du support de connecteurs (9).

6. Dispositif de distribution (1) selon la revendication précédente, **caractérisé en ce que** le capot de maintien (46) est réalisé en matériau plastique thermiquement conducteur ou en matériau métallique.

7. Dispositif de distribution (1) selon l'une des revendications 1 à 4, **caractérisé en ce que** le logement (35) est ménagé dans l'embase (31) du support de connecteurs (9) sous l'emplacement du au moins un raccord hydraulique (7, 8) destiné à être maintenu par le dispositif de fixation (18).

8. Dispositif de distribution (1) selon la revendication précédente, **caractérisé en ce que** l'embase (31) du support de connecteurs (9) est réalisée en matériau plastique thermiquement conducteur ou en matériau métallique.

9. Dispositif de distribution (1) selon l'une des revendications précédentes, **caractérisé en ce que** le logement (35) présente au moins une ouverture latérale (40) pour le passage des fils électriques (39) de l'élément chauffant (36).

10. Dispositif de distribution (1) selon l'une des revendications précédentes, **caractérisé en ce que** le dispositif de fixation (18) présente une cavité de forme générale cylindrique définissant l'emplacement destiné à recevoir le au moins un raccord hydraulique (7, 8), ladite cavité présentant :
- une première ouverture conformée pour le passage d'au moins une entrée du au moins un raccord hydraulique (7, 8),
- une deuxième ouverture conformée pour le passage d'au moins une première sortie du au moins un raccord hydraulique (7, 8), et
- une troisième ouverture conformée pour le passage d'au moins une deuxième sortie du au moins un raccord hydraulique (7, 8).

11. Système d'essuyage et/ou de lavage **caractérisé en ce qu'**il comporte un dispositif de distribution (1) selon l'une des revendications précédentes.

## Patentansprüche

1. Vorrichtung (1) zur Verteilung einer Scheibenwaschflüssigkeit, umfassend einen Träger (9) von Verbindern, umfassend eine Basis (31), welche mit einer Befestigungsvorrichtung (18) verbunden ist, die ausgelegt ist, mindestens eine hydraulische Kupplung (7, 8) an einem Ort der Basis (31) zu halten,
**dadurch gekennzeichnet, dass** eine Aufnahme (35), die ein Heizelement (36) der Verteilungsvorrichtung (1) aufnimmt, in dem Verbinderträger (9) angeordnet ist, wobei ein Wandabschnitt, der die Aufnahme (35) begrenzt, dazu bestimmt ist, mit der mindestens einen hydraulischen Kupplung (7, 8) in Kontakt zu stehen.

2. Verteilungsvorrichtung (1) nach dem vorhergehenden Anspruch,
**dadurch gekennzeichnet, dass** die Aufnahme (35) ein wärmeleitendes Harz (38) aufnimmt, welches das Heizelement (36) umhüllt, wobei das wärmeleitende Harz (38) mit den Wänden der Aufnahme (35) in Kontakt steht.

3. Verteilungsvorrichtung (1) nach einem der vorhergehenden Ansprüche,
**dadurch gekennzeichnet, dass** der Verbinderträger (9) eine Haltehülle (46) umfasst, welche mit der Basis (31) zusammenwirkt, um an der Basis (31) über dem Ort der mindestens einen hydraulischen Kupplung (7, 8) befestigt zu werden, die dazu bestimmt ist, von der Befestigungsvorrichtung (18) gehalten zu werden.

4. Verteilungsvorrichtung (1) nach dem vorhergehenden Anspruch,
**dadurch gekennzeichnet, dass** die Haltehülle (46) durch Einschnappen an der Basis (31) befestigt ist.

5. Verteilungsvorrichtung (1) nach einem der Ansprüche 3 oder 4,
**dadurch gekennzeichnet, dass** die Aufnahme (35) in einer Haltehülle (46) des Verbinderträgers (9) angeordnet ist.

6. Verteilungsvorrichtung (1) nach dem vorhergehenden Anspruch,
**dadurch gekennzeichnet, dass** die Haltehülle (46) aus einem wärmeleitenden Kunststoffmaterial oder aus einem Metallmaterial hergestellt ist.

7. Verteilungsvorrichtung (1) nach einem der Ansprüche 1 bis 4,
**dadurch gekennzeichnet, dass** die Aufnahme (35) in der Basis (31) des Verbinderträgers (9) unter dem Ort der mindestens einen hydraulischen Kupplung (7, 8) angeordnet ist, die dazu bestimmt ist, von der Befestigungsvorrichtung (18) gehalten zu werden.

8. Verteilungsvorrichtung (1) nach dem vorhergehenden Anspruch,
**dadurch gekennzeichnet, dass** die Basis (31) des Verbinderträgers (9) aus einem wärmeleitenden Kunststoffmaterial oder aus einem Metallmaterial hergestellt ist.

9. Verteilungsvorrichtung (1) nach einem der vorhergehenden Ansprüche,
**dadurch gekennzeichnet, dass** die Aufnahme (35) mindestens eine laterale Öffnung (40) für den Durchgang elektrischer Drähte (39) des Heizelements (36) aufweist.

10. Verteilungsvorrichtung (1) nach einem der vorhergehenden Ansprüche,
**dadurch gekennzeichnet, dass** die Befestigungsvorrichtung (18) einen Hohlraum mit einer allgemein zylindrischen Form aufweist, welcher einen Ort definiert, der dazu bestimmt ist, die mindestens eine hydraulische Kupplung (7, 8) aufzunehmen, wobei der Hohlraum aufweist:
- eine erste Öffnung, die für den Durchgang mindestens eines Einlasses der mindestens einen hydraulischen Kupplung (7, 8) angepasst ist,
- eine zweite Öffnung, die für den Durchgang mindestens eines ersten Auslasses der mindestens einen hydraulischen Kupplung (7, 8) angepasst ist, und
- eine dritte Öffnung, die für den Durchgang mindestens eines zweiten Auslasses der mindestens einen hydraulischen Kupplung (7, 8) angepasst ist.

11. Reinigungs- und/oder Waschsystem,
**dadurch gekennzeichnet, dass** dieses einen Verteilungsvorrichtung (1) nach einem der vorhergehenden Ansprüche umfasst.

## Claims

1. Washer fluid distribution device (1) comprising a connectors support (9) comprising a base (31) equipped with a fixing device (18) configured to hold at least one hydraulic coupling (7, 8) at a location on the base (31), **characterized in that** a housing (35) accommodating a heating element (36) of the distribution device (1) is formed in the connector support (9), a wall portion delimiting the housing (35) being intended to be in contact with the at least one hydraulic coupling (7, 8).

2. Distribution device (1) according to the preceding claim, **characterized in that** the housing (35) accommodates a heat-conducting resin (38) coating the heating element (36), the heat-conducting resin (38) being in contact with the walls of the housing (35).

3. Distribution device (1) according to one of the preceding claims, **characterized in that** the connector support (9) comprises a retaining cap (46) collaborating with the base (31) to be fixed to the base (31) over the location of the at least one hydraulic coupling (7, 8) that is intended to be held in place by the fixing device (18).

4. Distribution device (1) according to the preceding claim, **characterized in that** the retaining cap (46) is fixed to the base (31) by clip-fastening.

5. Distribution device (1) according to one of Claims 3 and 4, **characterized in that** the housing (35) is formed in a retaining cap (46) of the connectors support (9).

6. Distribution device (1) according to the preceding claim, **characterized in that** the retaining cap (46) is made of a heat-conducting plastic material or of a metallic material.

7. Distribution device (1) according to one of Claims 1 to 4, **characterized in that** the housing (35) is formed in the base (31) of the connectors support (9) underneath the location for the at least one hydraulic coupling (7, 8) intended to be held in place by the fixing device (18).

8. Distribution device (1) according to the preceding claim, **characterized in that** the base (31) of the connectors support (9) is made of a heat-conducting plastic material or of a metallic material.

9. Distribution device (1) according to one of the preceding claims, **characterized in that** the housing (35) has at least one lateral opening (40) for the passage of the electric wires (39) of the heating element (36).

10. Distribution device (1) according to one of the preceding claims, **characterized in that** the fixing device (18) has a cavity of cylindrical overall shape defining the location intended to accommodate the at least one hydraulic coupling (7, 8), the said cavity having:
- a first opening configured for the passage of at least one inlet of the at least one hydraulic coupling (7, 8),
- a second opening configured for the passage of at least one first outlet of the at least one hydraulic coupling (7, 8), and
- a third opening configured for the passage of at least one second outlet of the at least one hydraulic coupling (7, 8).

11. Washing and/or wiping system, **characterized in that** it comprises a distribution device (1) according to one of the preceding claims.
